(19) **Europäisches Patentamt / European Patent Office / Office européen des brevets**

(11) **EP 1 485 264 B1**

(12) **FASCICULE DE BREVET EUROPEEN**

(45) Date de publication et mention
de la délivrance du brevet:
**03.01.2007   Bulletin 2007/01**

(21) Numéro de dépôt: **03709757.3**

(22) Date de dépôt: **07.03.2003**

(51) Int Cl.:
**B60C 23/00** *(2006.01)*

(86) Numéro de dépôt international:
**PCT/EP2003/002347**

(87) Numéro de publication internationale:
**WO 2003/076215 (18.09.2003 Gazette 2003/38)**

(54) **METHODE ET SYSTEME DE PRECONISATION DE PNEUMATIQUES ET DE CALCUL SUR SITE DES PRESSIONS DE GONFLAGE DESDITS PNEUMATIQUES POUR UN VEHICULE DE GENIE CIVIL**

**VERFAHREN UND VORRICHTUNG ZUM VORSCHLAGEN VON REIFEN UND ZUM BERECHNEN DER REIFENDRÜCKE FÜR EIN BAUWERKFAHRZEUG VOR ORT**

**METHOD AND SYSTEM OF RECOMMENDING TYRES AND CALCULATING ON SITE THE INFLATION PRESSURES OF SAID TYRES FOR A VEHICLE USED FOR CIVIL ENGINEERING**

(84) Etats contractants désignés:
**AT BE BG CH CY CZ DE DK EE ES FI FR GB GR HU IE IT LI LU MC NL PT RO SE SI SK TR**

(30) Priorité: **13.03.2002  FR 0203272**

(43) Date de publication de la demande:
**15.12.2004   Bulletin 2004/51**

(73) Titulaires:
• **Société de Technologie Michelin**
  **63000 Clermont-Ferrand (FR)**
• **MICHELIN Recherche et Technique S.A.**
  **1763 Granges-Paccot (CH)**

(72) Inventeur: **CHAMPEAU, Christian**
  **F-63200 Mozac (FR)**

(74) Mandataire: **Dequire, Philippe Jean-Marie Denis M.F.P. Michelin,**
  **SGD/LG/PI-F35-Ladoux**
  **63040 Clermont-Ferrand Cedex 09 (FR)**

(56) Documents cités:
**EP-A- 1 044 828          DE-A- 4 014 379**
**US-A- 6 144 295**

• **CHARLES D. BADER: "Modern tire management" GRADING AND EXCAVATION CONTRACTOR, [en ligne] mars 2001 (2001-03), XP002219421 Extrait de l'Internet: <URL: www.forester.net/gx_0011_modern.html> [extrait le 2002-11-05]**

EP 1 485 264 B1

**Description**

La présente invention concerne le secteur technique des machines dites de « Génie Civil », telles que les chargeuses, les « dumpers », les camions, et véhicules analogues, aptes à charger, décharger et/ou transporter des matières telles que notamment des minerais ou matériaux analogues, ci après « véhicules » ou « machines » par simplicité.

Le problème technique qui se pose est celui de la détermination rapide et précise, sur site, c'est-à-dire sur le chantier, des valeurs optimales de la pression interne des pneumatiques à adopter pour les roues avant (AV) et arrière (AR) de ces véhicules, en fonction de très nombreux paramètres relatifs au véhicule, à son mode d'utilisation, au sol sur lequel il est amener à circuler, aux paramètres des pneumatiques disponibles, des caractéristiques de la charge, et facteurs analogues bien connus de l'homme de métier.

On connaît à ce jour des méthodes rudimentaires qui consistent essentiellement à estimer visuellement le comportement du véhicule en charge, et à en déduire par des calculs manuels et empiriques les pressions qui semblent les mieux adaptées. L'imprécision est très grande.

Le document EP 1 044 828 décrit une méthode de préconisation des pressions de gonflage.

Or, il est connu que le risque lié à de tels véhicules en charge, notamment les chargeuses à godet frontal, est le « basculement » vers l'avant sous l'effet d'une charge trop importante dans le godet et de paramètres de choix de pneumatiques et de pression mal adaptés.

Sur le terrain, l'homme de métier aura naturellement tendance, pour éviter ce risque, à recommander des charges plus faibles, avec naturellement un rendement nettement plus faible de la machine. Mais aussi des pressions de gonflage des pneumatiques adaptées pour la charge maxi (basculement) avec naturellement une sensibilité accrue aux coupures des pneumatiques donc un rendement plus faible.

On sait également qu'il ne faut pas préconiser de pression trop faible, mais qu'il ne faut pas non plus préconiser de pression trop élevée, car dans ce dernier cas apparaît alors un risque de coupure ou de déchirure du pneumatique sur certains sols.

D'autres facteurs à prendre en compte sont la stabilité de la machine, dont l'homme de métier sait qu'il peut l'améliorer en augmentant la pression de service, mais l'homme de métier sait aussi que cela affecte négativement la flottation du véhicule, c'est-à-dire sa capacité à circuler sur sol meuble ou mou, voire boueux.

On comprend donc que non seulement les paramètres sont innombrables, mais que de plus certains sont antagonistes. Il existe de plus de nombreux types et marques de machines, et de pneumatiques disponibles, etc... qui compliquent encore la solution du problème.

Il existe donc un besoin important et reconnu pour une méthode et un système simples et précis, assurant sécurité et optimisation des opérations.

L'invention concerne une telle méthode et un tel système qui utilisent certaines données choisies parmi les paramètres énoncés ci-dessus, les exploitent au sein d'équations « corrélées », corrigent l'estimation calculée par une appréciation visuelle ou une mesure plus précise du comportement de la machine en charge, le tout « en boucle » jusqu'à ce que les calculs de la méthode et l'impression (ou la mesure) de l'opérateur concernant le comportement en charge soient raisonnablement en cohérence.

Par « raisonnablement en cohérence », on désigne ici le fait que, au terme d'une, deux, ou plus, corrections en boucle, l'opérateur estime qu'il a atteint une solution calculée par la méthode et le système qui correspond au comportement réel de la machine, aux approximations près, et à la tolérance près que peut lui dicter son savoir-faire en la matière.

L'opérateur décide alors que la solution calculée est satisfaisante.

L'invention concerne donc une méthode de préconisation de pneumatiques sur site, et de calcul sur site des pressions de gonflage desdits pneumatiques, sur un véhicule dit « de Génie Civil » comportant un essieu avant, un essieu arrière et un godet destiné à recevoir une charge, notamment de minerai ou matériaux analogues. Cette méthode est caractérisée en ce que :

- on identifie le type de véhicule concerné et on recherche ses caractéristiques constructeurs connues ;
- on identifie la nature et on estime la densité DM du matériau à charger ;
- on réalise une estimation du taux de remplissage du godet TR dans des conditions de charge maximum d'usage sur le site considéré ;
- on calcule la charge CG dans le godet à partir de la capacité du godet VG et des grandeurs DM et TR estimées (équation 1) ;
- on calcule la surcharge sur l'essieu avant V à partir de la charge de basculement dudit véhicule (équation 3) ;
- on vérifie la valeur obtenue de la surcharge sur l'essieu avant V en fonction d'observations faites lorsque le véhicule est chargé à sa charge maximum d'usage sur le site considéré et à vide ;
- si le résultat de la vérification est négatif, on corrige les estimations de la densité du matériau chargé DM et/ou du taux de remplissage du godet TR et on effectue à nouveau la vérification de la valeur obtenue de la surcharge sur l'essieu avant V ; et

- si le résultat de la vérification est positif, on valide l'estimation de la charge maximale du godet CG dans les conditions d'usage sur le site considéré ;
- on utilise cette valeur de charge maximale du godet CG pour calculer les charges totales sur l'essieu avant ZAV et sur l'essieu arrière ZAR par deux équations de transfert de charges (équations 6.1 et 6.2) utilisant des données du constructeur dudit véhicule ;
- on calcule la charge sur chaque pneumatique avant par division par deux de la charge totale sur l'essieu avant et on choisit une valeur de charge pour les pneumatiques de l'essieu arrière une valeur « de sécurité » supérieure à la division par deux de la charge calculée sur l'essieu arrière, qui peut aller jusqu'à la moitié de la donnée constructeur de la charge à vide sur l'essieu arrière, et est de préférence égale à cette dernière valeur ;
- on détermine les conditions du sol du site concerné et la vitesse moyenne d'usage du véhicule ;
- on recherche parmi les données connues des manufacturiers de pneumatiques le ou les types de pneumatiques et de caractéristiques de pneumatiques (type, sculpture et qualité de gomme) correspondant le mieux aux charges calculées pour les pneumatiques de l'essieu avant et de l'essieu arrière, aux conditions d'utilisation du véhicule sur le site concerné notamment les conditions du sol et la vitesse moyenne d'usage ;
- on recherche parmi les données connues des manufacturiers de pneumatiques les pressions de service des pneumatiques sélectionnés dans l'étape précédente, sur les essieux avant et respectivement arrière correspondant aux charges calculées pour les pneumatiques de l'essieu avant et de l'essieu arrière ; et
- on choisit les pressions de service et les pneumatiques dudit véhicule.

La méthode selon l'invention utilise la valeur de la charge maximum du godet dans des conditions d'usage sur site pour déterminer les types de pneumatiques adaptés à l'usage sur le site considéré. Cette valeur CG est obtenue à partir de l'estimation d'une grandeur, par exemple le taux de remplissage du godet TR associée au calcul d'une autre grandeur telle que la surcharge sur l'essieu avant V, due à la charge du godet, exprimée en % de la charge de basculement. C'est la comparaison de ces deux grandeurs avec les observations réalisées sur le site qui va permettre à l'opérateur de corriger les valeurs estimées (TR, DM) et de valider la valeur obtenue de la charge du godet avec une précision bien meilleure que celle usuelle résultant de l'estimation d'une seule grandeur.

L'invention a aussi pour objet une méthode similaire dans laquelle, après avoir identifié la nature du matériau à charger et estimé sa densité DM, on réalise une estimation de la surcharge sur l'essieu avant V dans des conditions de charge maximum d'usage du godet à partir d'observations faites lorsque le véhicule est chargé à sa charge maximum d'usage sur le site considéré et à vide, puis on calcule le taux de remplissage du godet TR dans ces conditions d'usage à partir de la capacité du godet VG du véhicule et des valeurs estimées précédentes DM et V.

Comme précédemment, l'opérateur va valider la valeur obtenue de la charge du godet CG à partir de la comparaison conjointe des valeurs estimée de V et calculée de TR avec ses observations sur site. Cette validation s'effectue comme précédemment en réalisant des boucles de correction successives des valeurs estimées.

La méthode selon l'invention peut aussi, avant la validation de la valeur de la charge du godet CG, consister à appliquer successivement les étapes correspondantes contenues dans les deux procédés précédents pour améliorer la précision de l'estimation de cette charge du godet CG.

De préférence, l'estimation et/ou la vérification de la valeur de la surcharge sur l'essieu avant V est appréciée sur la base d'une mesure de l'écart de la flèche d'au moins un des pneumatiques du véhicule entre la valeur de flèche à vide et la valeur de flèche en charge pour le pneumatique considéré. On utilise donc une valeur relative qui améliore grandement la précision de la mesure et en conséquence, l'estimation ou la vérification de la grandeur V est très fiable.

De manière tout à fait préférée, on mesurera cette variation de hauteur de flèche par un méthode optique avec par exemple un crayon laser (ou instrument précis de mesure de ce type) positionné sur un emplacement stable de la roue, avec lecture des hauteurs sur une règle graduée positionnée en regard du rayon laser. On pourrait inversement placer une mire sur la roue et positionner le crayon laser face à cette mire. L'homme de métier comprendra ces dispositifs simples, et d'autres seront à sa portée.

De préférence, la méthode selon l'invention est telle qu'elle comporte de plus une étape de correction et/ou de détermination des limites d'usage des pressions de gonflage proposées, choisie parmi les opérations suivantes :

- correction de la vitesse du véhicule ; et/ou
- correction du facteur stabilité et du facteur flottation ; et/ou
- correction du type de sol ;
  (ces trois corrections entraînant une correction des pressions à partir des bases de données des manufacturiers de pneumatiques) ; et/ou
- choix d'une correction finale de pression.

En effet, après avoir entré les paramètres du constructeur et des conditions d'utilisation, et avoir obtenu des valeurs préconisées de pression pour certains types de pneumatiques, par la méthode ci-dessus, il est généralement important pour la sécurité de déterminer les limites de mise en oeuvre du véhicule.

On va donc explorer successivement (et indépendamment), si on le souhaite, l'influence d'une vitesse du véhicule plus élevée ou plus faible que celle prévue ; il sera alors prudent de sélectionner, dans la liste préconisée par la machine, un autre type de pneumatique, de gomme, de sculpture, voire d'autres pressions.

De même, on va explorer les paramètres de stabilité (que l'on peut améliorer par une augmentation de la pression interne des pneumatiques) et de flottation du véhicule (c'est-à-dire son aptitude à circuler sans risque sur des sols meubles, mous, boueux etc...). Ces deux facteurs étant antagonistes, il est important de vérifier qu'une amélioration de la flottation, rendue nécessaire par exemple par le type de sol rencontré, ou le risque d'intempéries, etc..., ne va pas compromettre la stabilité, ou inversement. Dans ce cas encore, l'opérateur préconisera une autre combinaison de paramètres pneumatique, de tolérance plus large.

Le type de sol peut également provoquer des problèmes sérieux de sécurité et d'endommagement des pneumatiques, par coupures ou déchirures, si la pression est trop élevée. Ici encore, la correction du facteur sol initial permettra d'explorer le comportement machine dans certaines conditions limites, afin de vérifier que la mise en oeuvre reste saine. Dans le cas contraire, on sélectionnera un autre préconisation.

Dans tous les cas où cette « exploration » atteint une zone à risque, une alarme est naturellement déclenchée, assortie d'un message approprié à l'écran du système.

Selon un mode de réalisation particulier, on constitue une base de données A avec l'ensemble des données constructeur connues des véhicules et cette base A comporte au moins les éléments suivants :

- une liste des références de machines avec pour chacune :

  - Poids à vide sur l'essieu avant, VAV ;
  - Poids à vide sur l'essieu arrière, VAR ;
  - Charge de basculement en ligne, CB ;
  - Dimension de(s) pneu(s) homologué(s) ;
  - Capacité du godet VG, en $m^3$ ; et
  - Capacité du godet en kg.

Comme le sait l'homme de métier, la notion de roues en ligne (ou charge de basculement en ligne) correspond à la configuration machine selon laquelle les axes de roues sont perpendiculaires à l'axe longitudinal de la machine, notamment l'essieu avant. Tel est le cas par exemple lorsque la machine avance vers le camion et commence à reculer sous charge. Dans un tel cas, la charge de basculement est la plus élevée.

La configuration « roues cassées » correspond au cas où le véhicule manoeuvre en faisant pivoter au moins deux roues, notamment les deux roues avant. Dans ce cas, l'homme de métier sait que la variation de centre de gravité qui en résulte conduit à une charge de basculement plus faible. Cette charge de basculement roues cassées peut optionnellement être utilisée pour donner une limite maximum à ne pas dépasser pour la valeur de la charge du godet.

Ces données sont obligatoirement connues (données constructeurs) dans le cas de la configuration roues en ligne (donnée constructeur obligatoire - « tipping load ») et très généralement connues en ce qui concerne la configuration roues cassées (également, donnée constructeur).

Selon un mode de réalisation particulier, on constitue une base de données **B** avec les données matériaux connues et cette base de données **B** comporte au moins les éléments suivants :

- données relatives aux matériaux usuels rencontrés, avec leurs densités DM.

Dans le meilleur mode de réalisation actuel, cette base de données comporte 24 matériaux types avec leur densité usuelle en $kg/m^3$, ainsi que les taux de minerai et de stérile, et/ou les densités DM des matériaux à charger en $kg/m^3$. Cette base de données permet ainsi de travailler à partir des densités des minerais associées à la teneur de ces minerais dans le site considéré, elle peut aussi donner directement la densité DM des matériaux à charger sur le site, cette dernière valeur intègre la teneur et la densité des roches complémentaires ou stériles qui vont devoir être chargées.

Cette base de données permet à l'opérateur de gagner beaucoup de temps et de précision dans la précision de la valeur de la charge du godet CG obtenue suivant la méthode de l'invention.

Bien entendu, si un cas spécial se présente, la base de données peut être modifiée sur site par l'opérateur.

Selon un mode de réalisation particulier, on constitue une base de données **C** avec les données des sols usuels et cette base de données **C** comporte au moins les éléments suivants :

- une liste d'états de sol, et leurs caractéristiques principales, avec éventuellement une indication subjective de qualité.

Dans le meilleur mode de réalisation actuel, on propose à l'opérateur 6 états de sols qui couvrent la quasi-totalité, si ce n'est pas la totalité, des situations rencontrées. Si un cas spécial se présente, la base de données peut être modifiée sur site par l'opérateur.

De façon préférentielle, on constitue aussi une base de données **D** des données pneumatiques des manufacturiers de pneumatiques et cette base de données **D** comporte au moins les éléments suivants :

- une liste de tous les pneus de la gamme GC avec pour chacun :

  - Dimension ;
  - Sculpture ;
  - Type de gomme ;
  - Plage d'utilisation en fonction du sol ;
  - Limite d'utilisation en fonction de la vitesse ;
  - Limite de charge ;
  - Pression limite ;
  - Pression en fonction de la charge.

Selon un mode de réalisation particulier, qui est le meilleur mode actuel, les équations 1 et 3 sont les suivantes :

$$CG = VG \times DM \times \frac{TR}{100} \qquad \text{(équation 1) ;}$$

$$V = \frac{CG}{CB} \times 100 \qquad \text{(équation 3) ;}$$

avec

CG = charge du godet
VG = capacité du godet en m$^3$,
DM = densité du matériau à charger en kg/m$^3$,
TR = taux de remplissage du godet en %,
V = estimation de la surcharge sur l'essieu avant, due à la charge du godet, exprimée en % de la charge de basculement du véhicule, et
CB = charge de basculement du véhicule en kg.

Selon un mode de réalisation particulier, qui est le meilleur mode actuel, les équations de transfert de charge sont les suivantes :

$$ZAV = VAV + \left( \frac{CB + VAR}{CB} \right) \times CG \qquad \text{(équation 6.1) ;}$$

et

$$ZAR = VAR - \left( \frac{VAR}{CB} \right) \times CG \qquad \text{(équation 6.2) ;}$$

avec

ZAV = charge sur l'essieu avant,
ZAR = charge sur l'essieu arrière,
VAV = charge à vide sur l'essieu avant,

CG, CB, VAR tels que définis précédemment.

Selon un mode de réalisation particulier, qui est le meilleur mode actuel, les équations 2 et 4 sont les suivantes :

$$CG = \frac{V}{100} \times CB \qquad \text{(équation 2) ;}$$

$$TR = \frac{CG}{VG \times DM} \times 100 \qquad \text{(équation 4).}$$

De préférence, la vitesse moyenne *Vitesse* est calculée par l'équation 5 suivante :

$$Vitesse = L \times Nb \qquad \text{(équation 5).}$$

Avec :

L = longueur du cycle de chargement/déchargement ;
Nb = nombre de cycles dans l'heure ;

les autres grandeurs étant telles que définies précédemment.

L'homme de métier comprendra que lesdites opérations sont effectuées, à l'exception de l'entrée des paramètres ou paramètres corrigés, par au moins un algorithme. La conception de cet algorithme ne pose naturellement aucun problème à un homme de métier.

L'invention concerne encore un système de préconisation sur site de pneumatiques, et de calcul sur site des pressions de gonflage desdits pneumatiques, sur un véhicule dit « de Génie Civil » comportant un essieu avant, un essieu arrière et un godet destiné à recevoir une charge, notamment de minerai ou matériau analogues, pour la mise en oeuvre de la méthode précédente. Ce système est caractérisé en ce qu'il comporte une électronique, au moins un élément de mémoire, et au moins un algorithme, adaptés pour :

- contenir les équations 1 à 6 ;
- les exploiter ; et
- calculer par les équations mentionnées une valeur de charge CG du godet et des charges sur les pneumatiques des essieux avant et arrière.

L'homme de métier n'aura naturellement aucune difficulté à concevoir l'électronique, les éléments et capacités de mémoire, et le ou les algorithmes.

Selon un mode de réalisation particulier, le système comporte en plus des moyens pour contenir les bases de données **A** à **D**.

Préférentiellement, le système comprend de plus un moyen algorithmique pour identifier, à partir des données de la base **D** (pneumatiques) et **A** (constructeur), des valeurs choisies de vitesse moyenne et de caractéristiques des sols ainsi que des valeurs des charges sur les pneumatiques des roues avant et respectivement arrière, le ou les types de pneumatiques, sculpture et qualité de gomme, les mieux appropriés ainsi que des moyens d'affichage de ceux-ci.

L'homme de métier saura construire un tel algorithme sans aucune difficulté.

Selon un mode de réalisation particulier, ledit système comprend de plus un moyen algorithmique pour identifier la valeur optimale de pression de gonflage dudit ou desdits pneumatique(s) sélectionnés, des moyens d'affichage de ces valeurs, et des moyens de sélection de chacune des valeurs et éventuellement de correction finale, et éventuellement d'impression ou de transfert de fichier.

L'invention sera mieux comprise à la lecture de la description avec le dessin annexé, dans lequel :

- la figure 1 présente, sous forme d'organigramme synthétique, la première partie de la méthode selon l'invention ; et
- la figure 2 présente, sous forme d'organigramme synthétique, la seconde partie de la méthode selon l'invention.

On prendra dans ce qui suit l'exemple d'une chargeuse.

La méthode selon l'invention peut très aisément être implantée sur un ordinateur portable avec un programme spécifique ou en paramétrant un logiciel tel un tableur.

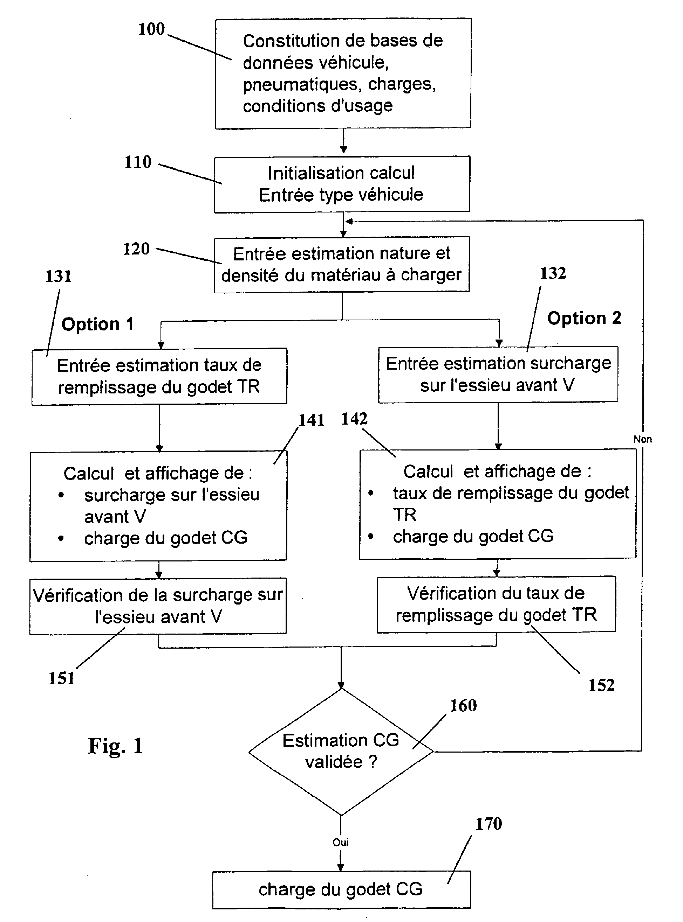

La première partie de la méthode selon l'invention est présentée à la figure 1.

L'opérateur va constituer tout d'abord les bases de données **A** à **D** (dont la plupart sont d'ailleurs déjà constituées, comme les bases de données constructeurs, minerai, pneumatiques, etc...) mais sont éventuellement à compléter ou modifier sur site, notamment caractéristiques spécifiques du minerai, certaines caractéristiques machine éventuellement, par exemple la capacité du godet que l'utilisateur peut avoir modifiée, les états de sol, etc... Etape 100.

Il initialise ensuite le système en entrant le type de véhicule concerné (étape 110).

Il identifie la nature du minerai du site et entre une estimation de la densité du matériau à charger (étape 120). Comme il a été dit, l'algorithme du système peut utiliser soit une valeur de densité du matériau à charger DM ou, optionnellement, utiliser la densité du minerai et son taux dans le matériau à charger.

Selon une première option, l'opérateur entre une estimation du taux de remplissage du godet TR (étape 131). Cette estimation est obtenue par une observation visuelle du véhicule chargé à sa charge maximum sur le site. Elle peut aussi être confortée par une discussion avec l'opérateur du véhicule.

Le système calcule et affiche alors la surcharge sur l'essieu avant V, exprimée en pourcentage de la charge de basculement CB du véhicule (donnée de la base A) ainsi que la charge du godet CG (étape 141). Cette surcharge V correspond à l'augmentation de la charge sur l'essieu avant entre les situations du godet à vide et en charge.

Le calcul de la charge du godet CG est effectué avec l'équation 1 suivante :

$$CG = VG \times DM \times \frac{TR}{100} \ ;$$

dans laquelle, VG est la capacité du godet en $m^3$ et DM une estimation de la densité du matériau à charger en $kg/m^3$.

Le calcul de la surcharge sur l'essieu avant V est effectué avec l'équation 3 suivante :

$$V = \frac{CG}{CB} \times 100 \ ;$$

dans laquelle, CB est la charge de basculement en ligne, donnée de la base A.

L'opérateur vérifie alors si la valeur calculée V correspond bien à ses propres observations visuelles ou à ses propres mesures (étape 151).

Si l'opérateur valide le calcul de V, il valide aussi le calcul de la charge du godet CG (étape 160). Cette première partie a ainsi pour objet de donner une estimation validée de cette charge du godet CG (étape 170).

Si l'opérateur considère que la surcharge sur l'essieu avant V et/ou la charge du godet CG ne sont pas satisfaisantes, il repart à l'étape 120.

Selon une seconde option, après l'étape 120, l'opérateur peut entrer une estimation de la surcharge sur l'essieu avant V (étape 132). Cette estimation peut être basée sur des observations visuelles de l'opérateur entre les situations « à vide » et « en charge maximum » d'usage pour le site et le véhicule considérés. Elle peut aussi être basée sur des mesures, comme cela sera décrit.

Le système calcule et affiche alors le taux de remplissage du godet TR qui est atteint, par exemple 70%, et la charge du godet CG (étape 142).

Le calcul de la charge de godet est effectué avec l'équation 2 suivante :

$$CG = \frac{V}{100} \times CB \ ;$$

dans laquelle CB est la charge de basculement du véhicule (donnée base A).

Le calcul du taux de remplissage du godet TR est effectué avec l'équation 4 suivante :

7

$$TR = \frac{CG}{VG \times DM} \times 100 \; ;$$

dans laquelle, comme précédemment, VG est la capacité du godet en m$^3$ (donnée de la base **A**) et DM la densité du matériau à charger en kg/m$^3$ (donnée estimée).

L'opérateur vérifie alors si la valeur calculée TR correspond bien à ses propres observations visuelles et discussions avec l'opérateur du véhicule (étape 152).

Si l'opérateur valide le calcul de TR, il valide aussi le calcul de la charge du godet CG (étape 160).

Si l'opérateur considère que le taux de remplissage TR et/ou la charge du godet CG ne sont pas satisfaisantes, il repart à l'étape 120.

Bien entendu, dans ce processus itératif, il peut choisir librement d'utiliser l'option 1 ou l'option 2 ou successivement les deux dans l'ordre de son choix.

Avantageusement, le système comporte des alertes qui se déclenchent lorsque l'une des valeurs entrée ou calculée est trop élevée. Par exemple lorsque la valeur V est telle que le véhicule devient instable (charge du godet supérieure à la capacité du godet exprimée en masse, ou supérieure à la charge de basculement roues cassées...). Ces alertes coopèrent pour une bonne estimation de la charge du godet.

Comme il a été indiqué, la valeur V peut être estimée ou validée par des observations visuelles ou des mesures. De façon très préférentielle, on effectue les mesures suivantes pour V :

- le véhicule considéré étant équipé d'un type de pneumatique connu et gonflé à une pression donnée et chargée au taux de remplissage prévu du godet, l'opérateur mesure une référence roue (hauteur par rapport au sol), de préférence par un système de mesure précis comme un crayon laser ;
- le godet du véhicule est ensuite vidé sans déplacement, et l'opérateur mesure la même référence de hauteur roue/sol, à vide ; et
- l'opérateur rentre dans le système, soit les deux hauteurs mesurées, le système calculant dH par soustraction, soit directement dH.

La mesure de dH correspond à la variation de flèche du pneumatique entre les situations à vide et en charge. Connaissant les caractéristiques du pneumatique considéré et la pression de gonflage effective lors des mesures, le système détermine la variation de charge subie par le pneumatique entre ces deux états. Il calcule ensuite la surcharge totale sur l'essieu avant et normalise cette valeur par division de la charge de basculement du véhicule. On obtient ainsi une très bonne estimation de la grandeur V.

L'intérêt de la mesure relative dH est de s'affranchir des erreurs de mesure de la flèche du pneumatique qui peuvent être dues au taux d'usure du pneumatique, à l'enfoncement du pneu dans le sol...

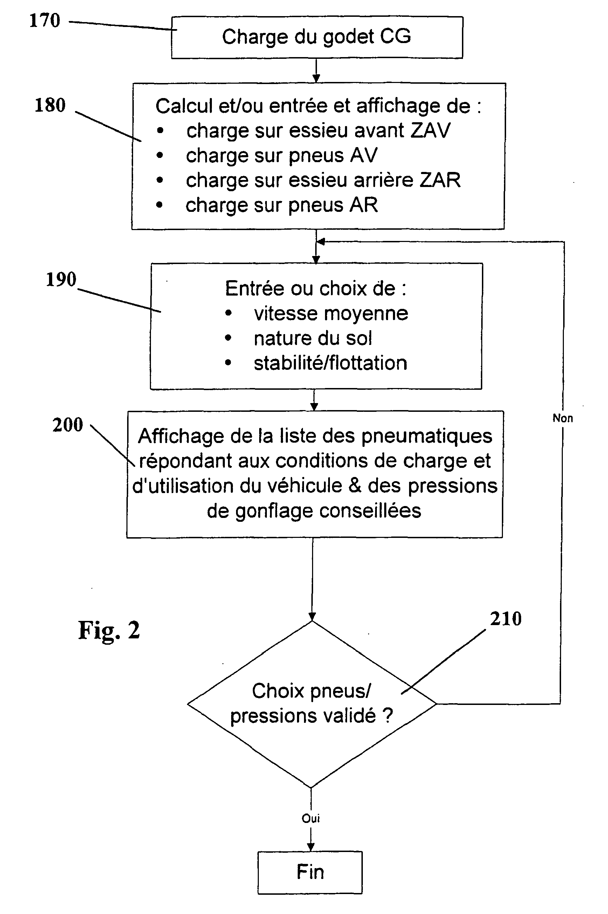

La figure 2 présente la seconde partie de la méthode selon l'invention.

La charge du godet CG étant validée (étape 170), le système calcule et affiche les charges sur les essieux avant et arrière ainsi que la charge sur chaque pneu avant. En ce qui concerne la charge sur chaque pneu arrière, le système peut systématiquement prévoir la demi charge à vide sur l'essieu arrière ou demander à l'opérateur toute autre valeur de son choix (étape 180).

Le calcul de la charge totale sur l'essieu avant est donné par l'équation 6.1 :

$$ZAV = VAV + \left( \frac{CB + VAR}{CB} \right) \times CG \; ;$$

et la charge totale sur l'essieu arrière par l'équation 6.2 :

$$ZAR = VAR - \left( \frac{VAR}{CB} \right) \times CG .$$

Les grandeurs de ces deux équations de transfert de charges ont déjà été définies.

A l'étape 190, le système demande l'entrée de la vitesse moyenne du véhicule, et de qualifier la nature du sol. 6 choix sont présentés en fonction de l'agressivité du sol.

Sur la base de ces données et des valeurs de charge, le système identifie à l'étape 200 dans les bases de données **A** (constructeur) et **D** (pneumatique) l'ensemble des pneumatiques appropriés ainsi que les pressions de gonflage conseillées en fonction des charges maximales calculées. Cette recherche peut s'effectuer parmi les pneumatiques homologués pour le véhicule concerné (en général, une liste d'une dizaine de références possibles, comportant le type, marque, qualité de gomme, type de sculpture, plage de pressions, etc...). Si nécessaire, l'opérateur peut aussi choisir d'élargir sa recherche au-delà des homologations constructeur.

Le système peut afficher, en fonction de paramètres prioritaires présents dans l'algorithme, une préférence décroissante des sélections, par exemple :

préféré, option 1, option 2, etc...

Le classement se fait dans l'ordre décroissant des dimensions homologuées par le constructeur (Standard, option 1,option2 etc...) et pour chaque dimension, en fonction de paramètres prioritaires présents dans l'algorithme, une préférence décroissante des sélections.

L'opérateur peut alors sélectionner l'une des options affichées, et le système affiche alors les pressions de gonflage calculées en fonction des facteurs de charge sur roue calculés plus haut, pour les pneumatiques avant et arrière.

L'opérateur valide alors les choix à l'étape 210 et c'est la fin du programme.

On dispose donc de la préconisation recherchée, avec une précision et un degré de sécurité et d'optimisation (y compris en ce qui concerne le rendement du véhicule) largement supérieur à celui obtenu dans l'art antérieur.

On peut encore affiner ce résultat, en explorant les limites de la préconisation, comme expliqué ci-dessus.

L'opérateur dispose de moyens (par exemple curseurs ou plages +/- sur lesquelles cliquer) permettant d'imposer des valeurs de vitesse véhicule, des facteurs de stabilité (pression pneumatique plus ou moins forte) ET paramètre antagoniste de flottation sur sol mou ou boueux, et des facteurs de type de sol, qui n'étaient pas les paramètres initiaux. On peut ainsi vérifier, comme expliqué plus haut, que la préconisation fonctionne dans les conditions prévues ET dans une certaine plage de tolérance sol, vitesse, stabilité/flottation. Si, sur un ou plusieurs facteurs, la tolérance est jugée trop faible, dépassant les données initiales prévues, l'opérateur devra rechercher une autre sélection de pneumatique, parmi ceux affichés, présentant une tolérance suffisante.

On mesure donc l'extrême précision de la méthode et du système selon l'invention.

Si l'opérateur ne valide pas le choix proposé, il repart à l'étape 190 et peut entrer de nouvelles valeurs de sol, de vitesse ou ajouter un critère complémentaire de stabilité et/ou de flottation des pneumatiques.

Enfin, l'opérateur, peut imposer une valeur finale de préconisation de pression selon son jugement personnel.

L'invention couvre également tous les modes de réalisation et toutes les applications qui seront directement accessibles à l'homme de métier à la lecture de la présente demande, de ses connaissances propres, et éventuellement d'essais simples de routine.

**Revendications**

1. Méthode de préconisation de pneumatiques sur site, et de calcul sur site des pressions de gonflage desdits pneumatiques, sur un véhicule dit « de Génie Civil » comportant un essieu avant, un essieu arrière et un godet destiné à recevoir une charge, notamment de minerai ou matériaux analogues, **caractérisée en ce que** :

- on identifie le type de véhicule concerné et on recherche ses caractéristiques constructeurs connues ;
- on identifie la nature et on estime la densité DM du matériau à charger ;
- on réalise une estimation du taux de remplissage du godet TR dans des conditions de charge maximum d'usage sur le site considéré ;
- on calcule la charge CG dans le godet à partir de la capacité du godet VG et des grandeurs DM et TR estimées (équation 1) ;
- on calcule la surcharge sur l'essieu avant V à partir de la charge de basculement dudit véhicule (équation 3) ;
- on vérifie la valeur obtenue de la surcharge sur l'essieu avant V en fonction d'observations faites lorsque le véhicule est chargé à sa charge maximum d'usage sur le site considéré et à vide ;
- si le résultat de la vérification est négatif, on corrige les estimations de la densité du matériau chargé DM et/ou du taux de remplissage du godet TR et on effectue à nouveau la vérification de la valeur obtenue de la surcharge sur l'essieu avant V ; et
- si le résultat de la vérification est positif, on valide l'estimation de la charge maximale du godet CG dans les conditions d'usage sur le site considéré ;
- on utilise cette valeur de charge maximale du godet CG pour calculer les charges totales sur l'essieu avant ZAV et sur l'essieu arrière ZAR par deux équations de transfert de charges (équations 6.1 et 6.2) utilisant des données du constructeur dudit véhicule ;

- on calcule la charge sur chaque pneumatique avant par division par deux de la charge totale sur l'essieu avant et on choisit une valeur de charge pour les pneumatiques de l'essieu arrière une valeur « de sécurité » supérieure à la division par deux de la charge calculée sur l'essieu arrière, qui peut aller jusqu'à la moitié de la donnée constructeur de la charge à vide sur l'essieu arrière, et est de préférence égale à cette dernières valeur ;

- on détermine les conditions du sol du site concerné et la vitesse moyenne d'usage du véhicule ;

- on recherche parmi les données connues des manufacturiers de pneumatiques le ou les types de pneumatiques et de caractéristiques de pneumatiques (type, sculpture et qualité de gomme) correspondant le mieux aux charges calculées pour les pneumatiques de l'essieu avant et de l'essieu arrière, aux conditions d'utilisation du véhicule sur le site concerné notamment les conditions du sol et la vitesse moyenne d'usage ;

- on recherche parmi les données connues des manufacturiers de pneumatiques les pressions de service des pneumatiques sélectionnés dans l'étape précédente, sur les essieux avant et respectivement arrière correspondant aux charges calculées pour les pneumatiques de l'essieu avant et de l'essieu arrière ; et

- on choisit les pressions de service et les pneumatiques dudit véhicule.

2. Méthode de préconisation de pneumatiques sur site, et de calcul sur site des pressions de gonflage desdits pneumatiques, sur un véhicule dit « de Génie Civil » comportant un essieu avant, un essieu arrière et un godet destiné à recevoir une charge, notamment de minerai ou matériaux analogues, **caractérisée en ce que** :

- on identifie le type de véhicule concerné et on recherche ses caractéristiques constructeurs ;

- on identifie la nature et on estime la densité DM du matériau à charger ;

- on réalise une estimation de la surcharge sur l'essieu avant V dans des conditions de charge maximum d'usage du godet à partir d'observations faites lorsque le véhicule est chargé à sa charge maximum d'usage sur le site considéré et à vide ;

- on calcule et on affiche la charge CG dans le godet à partir de la charge de basculement du véhicule concerné (équation 2) ;

- on calcule le taux de remplissage du godet TR dans lesdites conditions de charge maximum d'usage à partir de la capacité du godet VG dudit véhicule et des valeurs estimées précédentes DM et V (équation 4) ;

- on vérifie la valeur obtenue du taux de remplissage du godet TR en fonction d'observations faites lorsque le véhicule est chargé à sa charge maximum d'usage sur le site considéré ;

- si le résultat de la vérification est négatif, on corrige les estimations de la densité du matériau chargé DM et/ou de la surcharge sur l'essieu avant V et on effectue à nouveau la vérification de la valeur obtenue du taux de remplissage du godet TR ; et

- si le résultat de la vérification est positif, on valide l'estimation de la charge maximale du godet CG dans les conditions d'usage sur le site considéré ;

- on utilise cette valeur de charge maximale du godet CG pour calculer les charges totales sur l'essieu avant ZAV et sur l'essieu arrière ZAR par deux équations de transfert de charges (équations 6.1 et 6.2) utilisant des données du constructeur dudit véhicule ;

- on calcule la charge sur chaque pneumatique avant par division par deux de la charge totale sur l'essieu avant et on choisit une valeur de charge pour les pneumatiques de l'essieu arrière une valeur « de sécurité » supérieure à la division par deux de la charge calculée sur l'essieu arrière, qui peut aller jusqu'à la moitié de la donnée constructeur de la charge à vide sur l'essieu arrière, et est de préférence égale à cette dernières valeur ;

- on détermine les conditions du sol du site concerné et la vitesse moyenne d'usage du véhicule ;

- on recherche parmi les données connues des manufacturiers de pneumatiques le ou les types de pneumatiques et de caractéristiques de pneumatiques (type, sculpture et qualité de gomme) correspondant le mieux aux charges calculées pour les pneumatiques de l'essieu avant et de l'essieu arrière, aux conditions d'utilisation du véhicule sur le site concerné notamment les conditions du sol et la vitesse moyenne d'usage ;

- on recherche parmi les données connues des manufacturiers de pneumatiques les pressions de service des pneumatiques sélectionnés dans l'étape précédente, sur les essieux avant et respectivement arrière correspondant aux charges calculées pour les pneumatiques de l'essieu avant et de l'essieu arrière ; et

- on choisit les pressions de service et les pneumatiques dudit véhicule.

3. Méthode selon les revendications 1 et 2, dans laquelle avant la validation de la valeur de la charge du godet CG, on applique successivement les étapes correspondantes contenues dans les revendications 1 et 2.

4. Méthode selon l'une des revendications 1 à 3, dans laquelle l'estimation et/ou la vérification de la valeur de la surcharge sur l'essieu avant V est appréciée sur la base d'une mesure de l'écart de la flèche d'au moins un des pneumatiques du véhicule entre la valeur de flèche à vide et la valeur de flèche en charge pour le pneumatique considéré.

5. Méthode selon l'une des revendications 1 à 4, telle qu'elle comporte de plus une étape de correction et/ou de détermination des limites d'usage de cette pression, choisie parmi les opérations suivantes :

- correction de la vitesse du véhicule ; et/ou
- correction du facteur stabilité et du facteur flottation ; et/ou
- correction du type de sol ;
(ces trois corrections entraînant une correction des pressions à partir des bases de données des manufacturiers de pneumatiques) ; et/ou
- choix d'une correction finale de pression.

6. Méthode selon l'une des revendications 1 à 5, dans laquelle on constitue une base de données **A** avec l'ensemble des données constructeur connues des véhicules et dans laquelle cette base de données **A** comporte au moins les éléments suivants :

• une liste des références de machines avec pour chacune :

- Poids à vide de l'essieu avant ;
- Poids à vide de l'essieu arrière;
- Charge de basculement en ligne ;
- Dimension de(s) pneu(s) homologué(s) ;
- Capacité du godet en m$^3$ ; et
- Capacité du godet en kg.

7. Méthode selon l'une quelconque des revendications 1 à 6, dans laquelle on constitue une base de données **B** avec les données matériaux connues et dans laquelle la base de données **B** comporte au moins les éléments suivants :

• données relatives aux matériaux usuels rencontrés, dans le meilleur mode de réalisation actuel, 24 matériaux types, et leur densité usuelle en kg/m$^3$, ainsi que les taux de minerai et de stériles, et/ou les densités DM des matériaux à charger en kg/m$^3$.

8. Méthode selon l'une quelconque des revendications 1 à 7, dans laquelle on constitue un base de données **C** avec les données des sols usuels et dans laquelle la base de données **C** comporte au moins les éléments suivants :

• une liste d'états de sol, et leurs caractéristiques principales, avec éventuellement une indication subjective de qualité.

9. Méthode selon l'une quelconque des revendications 1 à 8, dans laquelle on constitue une base de données **D** et dans laquelle la base de données **D** comporte au moins les éléments suivants :

• une liste de tous les pneus de la gamme GC avec pour chacun :

- Dimension ;
- Sculpture ;
- Type de gomme ;
- Plage d'utilisation en fonction du sol ;
- Limite d'utilisation en fonction de la vitesse ;
- Limite de charge ;
- Pression limite ;
- Pression en fonction de la charge.

10. Méthode selon l'une quelconque des revendications 1 à 4, dans laquelle les équations 1 et 3 sont les suivantes :

$$CG = VG \times DM \times \frac{\text{TR}}{100} \qquad (\text{équation 1}) ;$$

et

$$CG = \frac{V}{100} \times CB \qquad\qquad \text{(équation 3)} ;$$

avec

CG = charge du godet
VG = capacité du godet en m$^3$,
DM = densité du matériau à charger en kg/m$^3$,
TR = taux de remplissage du godet en %,
V = estimation de la surcharge sur l'essieu avant, due à la charge du godet, exprimée en % de la charge de basculement du véhicule, et
CB = charge de basculement du véhicule en kg.

**11.** Méthode selon l'une quelconque des revendications 1 à 10, dans laquelle les équations de transfert de charge sont les suivantes :

$$ZAV = VAV + \left( \frac{CB + VAR}{CB} \right) \times CG \qquad\qquad \text{équation 6.1} ;$$

et

$$ZAR = VAR - \left( \frac{VAR}{CB} \right) \times CG \qquad\qquad \text{équation 6.2} ;$$

avec

ZAV = charge sur l'essieu avant ;
ZAR = charge sur l'essieu arrière ;
VAV = charge à vide sur l'essieu avant ;
VAR = charge à vide sur l'essieu arrière ;

CG, CB tels que définis dans la revendication 10.

**12.** Méthode selon l'une quelconque des revendications 1 à 11, dans laquelle les équations 2 et 4 sont les suivantes :

$$CG = \frac{V}{100} \times CB \qquad\qquad \text{équation 2} ;$$

$$TR = \frac{CG}{VG \times DM} \times 100 \qquad\qquad \text{équation 4.}$$

**13.** Méthode selon l'une quelconque des revendications 1 à 12, dans laquelle le paramètre vitesse moyenne est calculé selon l'équation suivante :

$$Vitesse = L \times Nb \qquad\qquad \text{équation 5 ;}$$

avec

L = longueur du cycle de chargement / déchargement en km ;
Nb = nombre de cycles par heure.

**14.** Méthode selon l'une quelconque des revendications 1 à 13, dans laquelle lesdites opérations sont effectuées, à l'exception de l'entrée des paramètres ou paramètres corrigés, par au moins un algorithme.

**15.** Système de préconisation sur site de pneumatiques, et de calcul sur site des pressions de gonflage desdits pneumatiques, sur un véhicule dit « de Génie Civil » comportant un essieu avant, un essieu arrière et un godet destiné à recevoir une charge, notamment de minerai ou matériau analogues, pour la mise en oeuvre de la méthode selon l'une quelconque des revendications 1 à 14, **caractérisé en ce qu'**il comporte une électronique, au moins un élément de mémoire, et au moins un algorithme, adaptés pour :

- contenir les équations 1 à 6 ;
- les exploiter ; et
- calculer par les équations mentionnées une valeur de charge CG du godet et des charges sur les pneumatiques des essieux avant et arrière.

**16.** Système selon la revendication 15, tel qu'il comporte en plus des moyens pour contenir les bases de données **A** à **D**.

**17.** Système selon l'une des revendications 15 et 16, tel qu'il comprend de plus un moyen algorithmique pour identifier, à partir des données de la base **D** (pneumatiques) et **A** (constructeur), des valeurs choisies de vitesse moyenne et de caractéristiques des sols ainsi que des valeurs des charges sur les pneumatiques des roues avant et respectivement arrière, le ou les types de pneumatiques, sculpture et qualité de gomme, les mieux appropriés ainsi que des moyens d'affichage de ceux-ci.

**18.** Système selon l'une des revendications 15 à 17, tel qu'il comprend de plus un moyen algorithmique pour identifier la valeur optimale de pression de gonflage dudit ou desdits pneumatique(s) sélectionnés, des moyens d'affichage de ces valeurs, et des moyens de sélection de chacune des valeurs et éventuellement de correction finale, et éventuellement d'impression ou de transfert de fichier.

**Claims**

**1.** A method of advocating tyres on site and of calculating on site inflation pressures of the said tyres for a so-called construction vehicle having a front axle, a rear axle and a bucket intended to receive a load, in particular of ore or similar materials, **characterised in that**:

- the type of vehicle concerned is identified and a search is made to find its known manufacturer characteristics;
- the nature of the material to be loaded is identified and its density DM estimated;
- an estimate is made of the filling level of the bucket TR in conditions of maximum load for use on the site in question;
- the load CG in the bucket is calculated from the capacity of the bucket VG and the values estimated for DM and TR (equation 1);
- the overload on the front axle V is calculated from the tipping load of the said vehicle (equation 3);
- the value obtained for the overload on the front axle V is verified from observations made when the vehicle is loaded to its maximum load for use on the site in question and when empty;
- if the result of the verification is negative, the estimates of the density of the loaded material DM and/or the filling level of the bucket TR are corrected and the verification of the value obtained for the overload on the front axle V is performed again; and
- if the result of the verification is positive, the estimate of the maximum load on the bucket CG is validated in the conditions of use on the site in question;
- this value for the maximum load on the bucket CG is used to calculate the total loads on the front axle ZAV and the rear axle ZAR by way of two equations for load transfer (equations 6.1 and 6.2), using data from the manufacturer of the said vehicle;
- the load on each front tyre is calculated by dividing the total load on the front axle by two, and a load value is chosen for the tyres of the rear axle, a "safety" value greater than the load on the rear axle which is calculated divided by two, which may be as little as half the datum given by the vehicle manufacturer for the load on the rear axle when empty, and is preferably equal to this last value;
- the conditions of the terrain on the site concerned and the average speed of use of the vehicle are determined;
- a search is made of the data known from tyre manufacturers for the type or types of tyres and characteristics of tyres (type, tread pattern and quality of the rubber compound) which best correspond to the loads calculated for the tyres of the front axle and the rear axle, the conditions of use of the vehicle on the site concerned, in particular the conditions of the terrain, and the average speed of use;
- a search is made of the data known from tyre manufacturers for the operating pressures of the tyres selected in the previous step on the front axle and rear axle respectively, corresponding to the loads calculated for the tyres of the front axle and rear axle; and
- the operating pressures and the tyres for the said vehicle are chosen.

2. A method of advocating tyres on site and of calculating on site inflation pressures of the said tyres for a so-called construction vehicle having a front axle, a rear axle and a bucket intended to receive a load, in particular of ore or similar materials, **characterised in that**:

- the type of vehicle concerned is identified and a search is made to find its known manufacturer characteristics;
- the nature of the material to be loaded is identified and its density DM estimated;
- an estimate is made of the overload on the front axle V in conditions of maximum use of the bucket from observations made when the vehicle is loaded to its maximum load for use on the site in question and when empty;
- the load CG in the bucket is calculated from the tipping load of the vehicle concerned, and displayed (equation 2);
- the filling level of the bucket TR is calculated under the said conditions of maximum load for use from the capacity of the bucket VG of the said vehicle and the values estimated above DM and V (equation 4);
- the value obtained for the filling level of the bucket TR is verified from observations made when the vehicle is loaded to its maximum load for use on the site in question;
- if the result of the verification is negative, the estimates of the density of the loaded material DM and/or the overload on the front axle V are corrected and the verification of the value obtained for the filling level of the bucket TR is performed again; and
- if the result of the verification is positive, the estimate of the maximum load on the bucket CG is validated in the conditions of use on the site in question;
- this value for the maximum load on the bucket CG is used to calculate the total loads on the front axle ZAV and the rear axle ZAR by way of two equations for load transfer (equations 6.1 and 6.2), using data from the manufacturer of the said vehicle;
- the load on each front tyre is calculated by dividing the total load on the front axle by two, and a load value is chosen for the tyres of the rear axle, a "safety" value greater than the load on the rear axle which is calculated divided by two, which may be as little as half the datum given by the vehicle manufacturer for the load on the rear axle when empty, and is preferably equal to this last value;
- the conditions of the terrain on the site concerned and the average speed of use of the vehicle are determined;
- a search is made of the data known from tyre manufacturers for the type or types of tyres and characteristics of tyres (type, tread pattern and quality of the rubber compound) which best correspond to the loads calculated for the tyres of the front axle and the rear axle, the conditions of use of the vehicle on the site concerned, in particular the conditions of the terrain, and the average speed of use;
- a search is made of the data known from tyre manufacturers for the operating pressures of the tyres selected in the previous step on the front axle and rear axle respectively, corresponding to the loads calculated for the tyres of the front axle and rear axle; and
- the operating pressures and the tyres for the said vehicle are chosen.

3. A method according to Claims 1 and 2, in which before validation of the value of the load on the bucket CG, the corresponding steps in Claims 1 et 2 are applied successively.

4. A method according to one of Claims 1 to 3, in which estimating and/or verifying the value of the overload on the front axle V is carried out on the basis of measuring the distance using the sagging of at least one of the tyres of the vehicle, between the sag value with no load and the sag value when the tyre in question is loaded.

5. A method according to one of Claims 1 to 4, such that it also includes a step of correcting and/or determining the limits for use of this pressure, this step being chosen from the following operations:

- correction of the speed of the vehicle; and/or
- correction of the stability factor and the flotation factor; and/or
- correction of the type of terrain;
(these three corrections giving rise to a correction of the pressures from databases from the tyre manufacturers); and/or
- choice of a final correction of the pressure.

6. A method according to one of Claims 1 to 5, in which a database A is created with all the known data from the manufacturers of the vehicles, and in which this database A includes at least the following elements:

   • a list of vehicle references with, for each one:

   - weight on front axle when empty;
   - weight on rear axle when empty;
   - in-line tipping load;
   - dimension of authorised tyre(s);
   - capacity of the bucket in $m^3$; and
   - capacity of the bucket in kg.

7. A method according to any one of Claims 1 to 6, in which a database **B** is created with the known material data, and in which the database **B** includes at least the following elements:

   • data relating to the usual materials involved, in the best current embodiment 24 types of materials with their usual density in $kg/m^3$, with the proportions of ore and deads, and/or the densities DM of the materials to be loaded in $kg/m^3$.

8. A method according to any one of Claims 1 to 7, in which a database **C** is created with the data about the usual terrain, and in which the database **C** includes at least the following elements:

   • a list of the terrain conditions and their principal characteristics, where appropriate with a subjective indication of quality.

9. A method according to any one of Claims 1 to 8, in which a database **D** is created, and in which the database **D** includes at least the following elements:

   • a list of all the tyres in the range GC with, for each one:

   - dimension;
   - tread pattern;
   - type of rubber compound;
   - range of use as a function of terrain;
   - limit of use as a function of speed;
   - load limit;
   - limit of pressure;
   - pressure as a function of load.

10. A method according to any one of Claims 1 to 4, in which equations 1 and 3 are as follows:

$$CG = VG \times DM \times \frac{\text{TR}}{100} \qquad \text{(equation 1)};$$

and

$$CG = \frac{V}{100} \times CB \qquad \text{(equation 3)};$$

where

CG = bucket load
VG = capacity of the bucket in $m^3$,
DM = density of the material to be loaded in $kg/m^3$,
TR = level of filling of the bucket in %,
V = estimate of the overload on the front axle resulting from the load on the bucket, expressed as % of the tipping load of the vehicle, and
CB = tipping load of the vehicle in kg.

11. A method according to any one of Claims 1 to 10, in which the equations for load transfer are as follows:

$$ZAV = VAV + \left( \frac{CB + VAR}{CB} \right) \times CG \qquad \text{equation 6.1};$$

and

$$ZAR = VAR - \left( \frac{VAR}{CB} \right) \times CG \qquad \text{equation 6.2};$$

where

ZAV = load on the front axle;
ZAR = load on the rear axle;
VAV = load on the front axle when empty;
VAR = load on the rear axle when empty;

CG, CB, VAR are as defined in Claim 10.

12. A method according to any one of Claims 1 to 11, in which equations 2 and 4 are as follows:

$$CG = \frac{V}{100} \times CB \qquad \text{equation 2};$$

$$TR = \frac{CG}{VG \times DM} \times 100 \qquad \text{equation 4}.$$

13. A method according to any one of Claims 1 to 12, in which the average speed parameter is calculated from the equation below:

$$speed = L \times Nb \qquad \text{equation 5};$$

where:

L = length of the cycle for loading/unloading in km;
Nb = number of cycles per hour.

14. A method according to any one of Claims 1 to 13, in which, with the exception of entering parameters or corrected parameters, the said operations are carried out using at least one algorithm.

15. A system for advocating tyres on site and for calculating on site inflation pressures for the said tyres, for a so-called construction vehicle having a front axle, a rear axle and a bucket intended to receive a load, in particular of ore or similar materials, for implementing the method according to any one of Claims 1 to 14, **characterised in that** it includes an electronics unit, at least one memory element and at least one algorithm which are suitable for:

- containing equations 1 to 6;
- utilising them; and
- calculating by way of the said equations a value for the load CG on the bucket and loads on the tyres of the front and rear axles.

16. A system according to Claim 15, such that it also includes means for containing the databases **A** to **D**.

17. A system according to one of Claims 15 and 16, such that it also comprises an algorithmic means in order to identify from the databases D (tyres) and A (vehicle manufacturer), the most appropriate values among those chosen for average speed and the characteristics of the terrain, and values for the loads on the tyres of the front and rear wheels respectively, the type or types of tyres, tread pattern and quality of the rubber compound, and means of displaying these.

18. A system according to one of Claims 15 to 17, such that it also comprises an algorithmic means in order to identify the optimum value for the inflation pressure of the said tyre or tyres selected, means of displaying these values, and means of selecting each of the values and where appropriate making a final correction, and where appropriate printing or transferring a file.


**Patentansprüche**

1. Verfahren zum Vorschlagen von Reifen vor Ort und zur Berechnung von Fülldruckwerten für die Reifen vor Ort bei einem "Tiefbau"-Fahrzeug mit einer Vorderachse, einer Hinterachse und einer Schaufel für die Aufnahme von einer Ladung, insbesondere von Erz oder entsprechenden Materialien, **dadurch gekennzeichnet, dass**:

- die Art des betreffenden Fahrzeugs identifiziert wird und nach den bekannten Konstruktionseigenschaften gesucht wird,
- die Art identifiziert und die Dichte DM des zu verladenden Materials abgeschätzt wird,
- eine Abschätzung der Füllhöhe der Schaufel TR unter den Bedingungen der maximalen Beladung im Betrieb an dem betreffenden Ort vorgenommen wird,
- die Ladung CG in der Schaufel ausgehend von dem Fassungsvermögen der Schaufel VG und den Größen DM und TR, die abgeschätzt wurden (Gleichung 1), berechnet wird,
- die Zuladung der Vorderachse V ausgehend von der Kippladung des Fahrzeugs (Gleichung 3) berechnet wird,
- der Wert, den man für die Zuladung auf der Vorderachse V erhalten hat, in Abhängigkeit von Überprüfungen, die gemacht werden, wenn das Fahrzeug mit seiner maximalen Betriebsladung an dem betreffenden Ort beladen wird und wenn es leer ist, verifiziert wird,
- wenn das Ergebnis der Verifizierung negativ ist, die Abschätzungen der Dichte des verladenen Materials DM und/oder der Füllhöhe der Schaufel TR korrigiert werden und der Wert, den man für die Zuladung der Vorderachse V erhalten hat, erneut verifiziert wird und
- wenn das Ergebnis der Verifizierung positiv ist, die Abschätzung der maximalen Beladung der Schaufel CG unter den Betriebsbedingungen an dem betreffenden Ort validiert wird,
- dieser Wert für die maximale Beladung der Schaufel CG zum Berechnen der Gesamtlasten auf der Vorderachse ZAV und auf der Hinterachse ZAR durch zwei Gleichungen für den Lastentransfer (Gleichungen 6.1 und 6.2) unter Verwendung der Konstruktionsdaten des Fahrzeugs verwendet wird,
- die Last auf jedem Reifen vorne durch Dividieren der Gesamtlast auf der Vorderachse durch zwei und Wahl eines für die Hinterachse berechneten "Sicherheits"-Wertes als Wert für die Belastung der Reifen an der Hinterachse, der größer als die Division der Last durch zwei ist, berechnet wird, was bis zur Hälfte der Konstruktionsangaben für die Last im leeren Zustand auf der Hinterachse führen kann und vorzugsweise gleich diesem letzten Wert ist,

- die Bedingungen des Bodens an dem betreffenden Ort und die mittlere Betriebsgeschwindigkeit des Fahrzeugs bestimmt werden,

- der oder die Reifentypen und die Eigenschaften der Reifen (Typ, Profil und Qualität des Gummis) unter den bekannten Daten der Reifenhersteller gesucht werden, die am besten den berechneten Belastungen für die Reifen der Vorderachse und der Hinterachse sowie den Nutzungsbedingungen des Fahrzeugs an dem betreffenden Ort, insbesondere den Bedingungen des Bodens und der mittleren Betriebsgeschwindigkeit, entsprechen,

- die Betriebsdruckwerte bei den in dem vorangehenden Schritt ausgewählten Reifen an der Vorderachse bzw. Hinterachse entsprechend den berechneten Lasten für die Reifen an der Vorderachse und Hinterachse unter den bekannten Daten der Reifenhersteller gesucht werden und

- die Betriebsdruckwerte und die Reifen des Fahrzeugs ausgewählt werden.

2. Verfahren zum Vorschlagen von Reifen vor Ort und zur Berechnung von Fülldruckwerten der Reifen vor Ort bei einem "Tiefbau"-Fahrzeug mit einer Vorderachse, einer Hinterachse und einer Schaufel für die Aufnahme einer Ladung, insbesondere von Erz oder analogen Materialien, **dadurch gekennzeichnet, dass**:

- die Art des betreffenden Fahrzeugs identifiziert wird und nach den bekannten Konstruktionseigenschaften gesucht wird,

- die Art identifiziert und die Dichte DM des zu verladenden Materials abgeschätzt wird,

- eine Abschätzung der Zuladung der Vorderachse V unter den Bedingungen des maximalen Einsatzes der Schaufel ausgehend von Überprüfungen, die angestellt werden, wenn das Fahrzeug vor dem betreffenden Ort maximal beladen ist und leer ist, vorgenommen wird,

- die Ladung CG in der Schaufel ausgehend von der Kippladung des betreffenden Fahrzeugs berechnet (Gleichung 2) und angezeigt wird,

- die Füllhöhe der Schaufel TR unter den Bedingungen der Maximallast im Betrieb ausgehend von dem Fassungsvermögen der Schaufel VG des Fahrzeugs und der vorher abgeschätzten Werte DM und V (Gleichung 4) berechnet wird,

- der Wert, den man für die Füllhöhe der Schaufel TR in Abhängigkeit von Überprüfungen erhalten hat, die gemacht werden, wenn das Fahrzeug mit seiner Maximallast im Betrieb an dem betreffenden Ort beladen ist, verifiziert wird,

- wenn das Ergebnis der Verifizierung negativ ist, die Abschätzungen der Dichte des verladenen Materials DM und/oder der Zuladung auf der Vorderachse V korrigiert werden und der Wert, den man für die Füllhöhe der Schaufel TR erhalten hat, erneut verifiziert wird und

- wenn das Ergebnis der Verifizierung positiv ist, die Abschätzung der maximalen Beladung der Schaufel CG unter den Betriebsbedingungen an dem betreffenden Ort validiert wird,

- dieser Wert für die maximale Beladung der Schaufel CG zum Berechnen der Gesamtlasten auf der Vorderachse ZAV und auf der Hinterachse ZAR durch zwei Gleichungen für den Lastentransfer (Gleichungen 6.1 und 6.2) unter Verwendung der Konstruktionsdaten des Fahrzeugs verwendet wird,

- die Last auf jedem Reifen vorne durch Dividieren der Gesamtlast auf der Vorderachse durch zwei und Wahl eines für die Hinterachse berechneten "Sicherheits"-Wertes als Wert für die Belastung der Reifen an der Hinterachse, der größer als die Division der Last durch zwei ist, was bis zur Hälfte der Konstruktionsangaben für die Last im leeren Zustand auf der Hinterachse führen kann und vorzugsweise gleich diesem letzten Wert ist, berechnet wird,

- die Bedingungen des Bodens an dem betreffenden Ort und die mittlere Betriebsgeschwindigkeit des Fahrzeugs bestimmt wird,

- der oder die Reifentypen und die Eigenschaften der Reifen (Typ, Profil und Qualität des Gummis) unter den bekannten Daten der Reifenhersteller, die am besten den berechneten Belastungen für die Reifen der Vorderachse und der Hinterachse sowie den Nutzungsbedingungen des Fahrzeugs an dem betreffenden Ort, insbesondere den Bedingungen des Bodens und der mittleren Betriebsgeschwindigkeit, entsprechen, gesucht wird,

- die Betriebsdruckwerte bei den in dem vorangehenden Schritt ausgewählten Reifen an der Vorderachse bzw. Hinterachse entsprechend den berechneten Lasten für die Reifen an der Vorderachse und Hinterachse unter den bekannten Daten der Reifenhersteller gesucht werden und

- die Betriebsdruckwerte und die Reifen des Fahrzeugs ausgewählt werden.

**3.** Verfahren nach Anspruch 1 oder 2, bei dem vor der Validierung des Wertes für die Beladung der Schaufel CG nacheinander die entsprechenden Schritte in den Ansprüchen 1 und 2 ausgeführt werden.

**4.** Verfahren nach einem der Ansprüche 1 bis 3, bei dem die Abschätzung und/oder die Verifizierung des Wertes der Zuladung der Vorderachse V auf der Basis einer Messung des Durchbiegungsunterschiedes wenigstens eines der Reifen des Fahrzeugs zwischen dem Wert für die Durchbiegung im leeren Zustand und dem Wert für die Durchbiegung im beladenen Zustand für den betreffenden Reifen geschätzt wird.

**5.** Verfahren nach einem der Ansprüche 1 bis 4, wobei außerdem ein Schritt der Korrektur und/oder der Bestimmung von Grenzen für die Benutzung dieses Druckes vorgesehen ist, ausgewählt unter den folgenden Operationen:

- Korrektur der Geschwindigkeit des Fahrzeugs und/oder
- Korrektur des Stabilitätsfaktors und des Schwimmfaktors und/oder
- Korrektur der Art des Bodens,
- (diese drei Korrekturen haben eine Korrektur der Druckwerte ausgehend von der Datenbank der Reifenhersteller zur Folge) und/oder
- Auswahl einer endgültigen Korrektur für den Druck.

**6.** Verfahren nach einem der Ansprüche 1 bis 5, bei dem eine Datenbank A mit der Gruppe von bekannten Konstruktionsdaten des Fahrzeugs gebildet wird, und bei dem diese Datenbank A wenigstens die folgenden Elemente umfasst:

■ eine Liste mit Referenzmaschinen mit jeweils:

- Leergewicht für die Vorderachse,
- Leergewicht für die Hinterachse,
- Kippladung bei Ausrichtung,
- Dimensionen des/der entsprechenden Reifen,
- Fassungsvermögen der Schaufel in $m^3$ und
- Fassungsvermögen der Schaufel in kg.

**7.** Verfahren nach einem der Ansprüche 1 bis 6, bei dem eine Datenbank B gebildet wird mit den bekannten Daten der Materialien und bei dem die Datenbank B wenigstens die folgenden Elemente umfasst:

■ Daten in Bezug auf die üblicherweise angetroffenen Materialien, wobei bei der besten Umsetzung 24 Materialarten und ihre übliche Dichte in $kg/m^3$ sowie der Anteil von Erz und taubem Gestein und/oder die Dichten DM der zu verladenden Materialien in $kg/m^3$ erfasst werden.

**8.** Verfahren nach einem der Ansprüche 1 bis 7, bei dem eine Datenbank C mit den Daten der üblichen Böden aufgestellt wird und bei dem die Datenbank C wenigstens die folgenden Elemente umfasst:

■ eine Liste mit Bodenzuständen und ihren Haupteigenschaften sowie eventuell mit einer subjektiven Angabe der Qualität.

**9.** Verfahren nach einem der Ansprüche 1 bis 8, bei dem eine Datenbank D aufgestellt wird und bei dem die Datenbank D wenigstens die folgenden Elemente umfasst:

■ eine Liste mit allen Reifen im Bereich GC mit jeweils:

- Dimension,
- Profil,
- Art des Gummis,
- Verwendungsbereich in Abhängigkeit vom Boden,
- Benutzungsbeschränkung in Abhängigkeit von der Geschwindigkeit,
- Grenzladung,
- Grenzdruck,
- Druck in Abhängigkeit von der Ladung.

**10.** Verfahren nach einem der Ansprüche 1 bis 4, bei dem die Gleichungen 1 und 3 die folgenden sind:

$$CG = VG \ x \ DM \ x \ \frac{TR}{100} \qquad \text{(Gleichung 1)}$$

und

$$CG = \frac{V}{100} \ x \ CB \qquad \text{(Gleichung 3),}$$

wobei

CG = Ladung der Schaufel,
VG = Fassungsvermögen der Schaufel in $m^3$,
DM = Dichte des zu verladenden Materials in $kg/m^3$,
TR = Füllhöhe der Schaufel in %,
V = Abschätzung der Zuladung der Vorderachse auf Grund der Ladung der Schaufel, ausgedrückt in % der Kippladung des Fahrzeugs, und
CB = Kippladung des Fahrzeugs in kg ist.

**11.** Verfahren nach einem der Ansprüche 1 bis 10, bei dem die Gleichungen für den Lastentransfer die folgenden sind:

$$ZAV = VAV + \left( \frac{CB + VAR}{CB} \right) x \ CG \qquad \text{Gleichung 6.1,}$$

und

$$ZAR = VAR - \left( \frac{VAR}{CB} \right) x \ CG \qquad \text{Gleichung 6.2,}$$

mit

ZAV = Last auf Vorderachse,
ZAR = Last auf Hinterachse,
VAV = Leerlast auf Vorderachse,
VAR = Leerlast auf Hinterachse,

CG, CB wie definiert in Anspruch 10.

**12.** Verfahren nach einem der Ansprüche 1 bis 11, bei dem die Gleichungen 2 und 4 die folgenden sind:

$$CG = \frac{V}{100} \ x \ CB \qquad \text{Gleichung 2,}$$

$$TR = \frac{CG}{VG \ x \ DM} \ x \ 100 \qquad \text{Gleichung 4.}$$

**13.** Verfahren nach einem der Ansprüche 1 bis 12, bei dem der Parameter der mittleren Geschwindigkeit berechnet wird gemäß der folgenden Gleichung:

$$Vitesse = L \ x \ Nb \hspace{4cm} \text{Gleichung 5,}$$

wobei

L = die Länge des Lade-/Entlade-Zyklus in km ist,
Nb = die Zahl der Zyklen pro Stunde ist.

**14.** Verfahren nach einem der Ansprüche 1 bis 13, bei dem die Operationen mit Ausnahme der Eingabe von Parametern oder korrigierten Parametern durch wenigstens einen Algorithmus ausgeführt werden.

**15.** System zum Vorschlagen von Reifen vor Ort und zum Berechnen von Fülldrücken der genannten Reifen vor Ort bei einem "Tiefbau"-Fahrzeug mit einer Vorderachse, einer Hinterachse und einer Schaufel zur Aufnahme von Ladung, insbesondere von Erz oder analogen Materialien, um das Verfahren nach einem der Ansprüche 1 bis 14 umzusetzen, **dadurch gekennzeichnet, dass** es eine Elektronik, wenigstens ein Speicherelement und wenigstens einen Algorithmus umfasst, die geeignet sind, um:

- die Gleichungen 1 bis 6 aufzuführen,
- sie auszuwerten und
- mit den genannten Gleichungen einen Wert für die Last CG der Schaufel und die Lasten auf den Reifen der Vorderachse und der Hinterachse zu berechnen.

**16.** System nach Anspruch 15, das darüber hinaus Einrichtungen für die Datenbanken A bis D umfasst.

**17.** System nach Anspruch 15 oder 16, das darüber hinaus einen Algorithmus, um auf Grund der Datenbank D (Reifen) und A (Konstrukteur) Werte, die bezüglich der mittleren Geschwindigkeit und bezüglich Eigenschaften des Bodens ausgewählt wurden, wie auch Werte für die Lasten auf den Reifen der Räder vorne bzw. hinten, des oder der Reifentypen, des Profils und der Qualität des Gummis, die am besten geeignet sind, zu identifizieren, wie auch Vorrichtungen für die Anzeige von diesen umfasst.

**18.** System nach einem der Ansprüche 15 bis 17, das darüber hinaus einen Algorithmus, um den optimalen Wert für den Fülldruck des oder der ausgewählten Reifen zu identifizieren, Einrichtungen zur Anzeige dieser Werte und Einrichtungen zur Auswahl jeweils eines der Werte und eventuell einer letzten Korrektur und eventuell zum Ausdrucken oder zum Kopieren von Dateien umfasst.

100

Constitution de bases de
données véhicule,
pneumatiques, charges,
conditions d'usage

110

Initialisation calcul
Entrée type véhicule

120

Entrée estimation nature et
densité du matériau à charger

131

**Option 1**

Entrée estimation taux de
remplissage du godet TR

132

**Option 2**

Entrée estimation surcharge
sur l'essieu avant V

Non

141 142

Calcul et affichage de :
- surcharge sur l'essieu
  avant V
- charge du godet CG

Calcul et affichage de :
- taux de remplissage du godet
  TR
- charge du godet CG

Vérification de la surcharge sur
l'essieu avant V

Vérification du taux de
remplissage du godet TR

151

152

**Fig. 1**

160

Estimation CG
validée ?

170

Oui

charge du godet CG

170 — Charge du godet CG

180 Calcul et/ou entrée et affichage de :
- charge sur essieu avant ZAV
- charge sur pneus AV
- charge sur essieu arrière ZAR
- charge sur pneus AR

190 Entrée ou choix de :
- vitesse moyenne
- nature du sol
- stabilité/flottation

200 Affichage de la liste des pneumatiques répondant aux conditions de charge et d'utilisation du véhicule & des pressions de gonflage conseillées

Non

**Fig. 2**

210

Choix pneus/ pressions validé ?

Oui

Fin